(19) Europäisches Patentamt / European Patent Office / Office européen des brevets

(11) **EP 4 340 060 A1**

(12) **EUROPEAN PATENT APPLICATION**
published in accordance with Art. 153(4) EPC

(43) Date of publication:
**20.03.2024 Bulletin 2024/12**

(21) Application number: **23775347.0**

(22) Date of filing: **24.03.2023**

(51) International Patent Classification (IPC):
$H01M\ 4/1395^{(2010.01)}$    $H01M\ 4/38^{(2006.01)}$
$H01M\ 4/583^{(2010.01)}$    $H01M\ 4/134^{(2010.01)}$
$H01M\ 4/62^{(2006.01)}$    $H01M\ 4/04^{(2006.01)}$
$H01M\ 10/052^{(2010.01)}$    $H01M\ 4/02^{(2006.01)}$

(52) Cooperative Patent Classification (CPC):
H01M 4/02; H01M 4/04; H01M 4/134;
H01M 4/1395; H01M 4/38; H01M 4/583;
H01M 4/62; H01M 10/052; Y02E 60/10

(86) International application number:
**PCT/KR2023/003923**

(87) International publication number:
**WO 2023/182852 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.03.2022 KR 20220037219**

(71) Applicant: **LG Energy Solution, Ltd.
Seoul 07335 (KR)**

(72) Inventors:
• **KIM, Young Jae
  Daejeon 34122 (KR)**
• **LEE, Jaewook
  Daejeon 34122 (KR)**

(74) Representative: **Hoffmann Eitle
Patent- und Rechtsanwälte PartmbB
Arabellastraße 30
81925 München (DE)**

(54) **ANODE COMPOSITION, ANODE FOR LITHIUM SECONDARY BATTERY, AND LITHIUM SECONDARY BATTERY COMPRISING ANODE**

(57) The present application relates to a negative electrode composition, a negative electrode for a lithium secondary battery, and a lithium secondary battery including a negative electrode.

[Figure 1]

## Description

[Technical Field]

This application claims priority to and the benefit of Korean Patent Application No. 10-2022-0037219 filed in the Korean Intellectual Property Office on March 25, 2022, the entire contents of which are incorporated herein by reference.

The present application relates to a negative electrode composition, a negative electrode for a lithium secondary battery, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-based particles having a high discharge capacity may be used as the negative electrode active material.

In particular, according to the demand for high-density energy batteries in recent years, researches are being actively conducted on a method for increasing a capacity by using a silicon-based compound such as Si/C or SiOx having a capacity greater than, by a factor of 10 or more, graphite-based materials, as a negative electrode active material. When compared with graphite that is typically used, however, the silicon-based compound that is a high-capacity material has a large capacity but undergoes rapid volume expansion during a charging process, thereby disconnecting a conductive path to degrade battery characteristics.

Accordingly, in order to address a problem occurring when the silicon-based compound is used as the negative electrode active material, a measure for controlling a driving potential, a measure for suppressing the volume expansion itself such as a method of further coating a thin film on an active material layer additionally and a method of controlling a particle diameter of a silicon-based compound, or various measures for preventing a conductive path from being disconnected have been discussed. However, the above measures may rather deteriorate the performance of a battery, and thus, the application thereof is limited, so that there is still a limitation in commercializing the manufacturing of a negative electrode battery having a high content of a silicon-based compound.

Therefore, it is necessary to study a negative electrode composition capable of preventing the volume expansion and surface breakage due to the charging and discharging, in the process of manufacturing a silicon-based negative electrode for maximizing capacity characteristics.

Citation List

Patent Literature

(Patent Literature 1) Japanese Patent Application Publication No. 2009-080971

[Detailed Description of the Invention]

[Technical Problem]

In the silicon-based negative electrode, a negative electrode binder is used to control volume expansion due to the charging and discharging, and a negative electrode conductive material is used to maintain a conductive path. However, the problem of volume expansion due to the charging and discharging is still not solved.

As a result of research to improve the above problems, it has been found that the volume expansion can be controlled when a carbon-based material with a certain condition is included in a specific content in a negative electrode composition.

Accordingly, the present application relates to a negative electrode composition capable of solving the above problems, and a negative electrode for a lithium secondary battery including the same, and a lithium secondary battery including the negative electrode.

[Technical Solution]

An exemplary embodiment of the present specification provides a negative electrode composition including: a silicon-based active material; a negative electrode conductive material; a negative electrode binder; and a carbon-based material, in which the carbon-based material is included in an amount of 15 parts by weight or less on the basis of 100 parts by weight of the negative electrode composition, and in which the carbon-based material has a charge capacity of 400 mAh/g or higher, a discharge capacity of 350 mAh/g or higher, and a charge/discharge efficiency of 90% or less.

Another exemplary embodiment of the present invention provides a negative electrode for a lithium secondary battery including a negative electrode current collector layer; and a negative electrode active material layer including the negative electrode composition according to the present application formed on one surface or both surfaces of the negative electrode current collector layer.

Finally, a lithium secondary battery including a positive electrode; the negative electrode for a lithium secondary battery according to the present application; a separator provided between the positive electrode and the negative electrode; and an electrolyte is provided.

[Advantageous Effects]

The negative electrode composition according to the present application includes the silicon-based active material in order to increase the capacity of the negative electrode, and also includes the carbon-based material with the certain condition in the specific content for serving as a negative electrode active material. Accordingly, the volume expansion due to the charging and discharging can be effectively prevented, as compared with a case in which the negative electrode composition includes the silicon-based active material alone.

In addition, the negative electrode composition according to the present application has the composition as described above, so that during the first charging, both the carbon-based material and the silicon-based active material are charged with lithium ions, and at the same time, a phenomenon that lithium ions are transferred to the silicon-based active material having a large capacity according to the difference in capacity of the active materials occurs. Accordingly, the diffusion of lithium ions can be improved, and the uniformity of the overall charging of the silicon-based negative electrode including the lithium ions can be increased.

Further, the negative electrode composition according to the present application includes the carbon-based material of the specific condition in the specific content, so that, when the carbon-based material having lower charge/discharge efficiency than the silicon-based active material is used, excess lithium ions are accumulated in some of the silicon-based active material and the effect of prelithiation can also be obtained, thereby exhibiting an excellent effect in the silicon-based negative electrode whose performance is improved according to the charging depth.

Lastly, since the carbon-based material in which the charged lithium ions are diffused into the silicon-based active material is a conductive material, it remains in the negative electrode, and thus, has a characteristic of increasing the conductivity inside the electrode.

[Brief Description of Drawings]

FIG. 1 shows a laminated structure of a negative electrode for a lithium secondary battery according to an exemplary embodiment of the present application.
FIG. 2 shows a laminated structure of a lithium secondary battery according to an exemplary embodiment of the present application.

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" means a particle size distribution, and means a particle size at the n% point in the cumulative distribution of the number of particles according to the particle size. That is, D50 is the particle size (center particle size) at the 50% point in the cumulative distribution of the number of particles according to the particle size, D90 is the particle size at the 90% point in the cumulative distribution of the number of particles according to the particle size, and D10 is the particle size at the 10% point in the cumulative distribution of the number of particles according to the particle size. Meanwhile, the center particle size may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In an exemplary embodiment of the present application, the particle size or particle diameter may mean an average diameter or representative diameter of each particle constituting the particles.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, exemplary embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a negative electrode composition including: a silicon-based active material; a negative electrode conductive material; a negative electrode binder; and a carbon-based material, in which the carbon-based material is included in an amount of 15 parts by weight or less on the basis of 100 parts by weight of the negative electrode composition, and in which the carbon-based material has a charge capacity of 400 mAh/g or higher, a discharge capacity of 350 mAh/g or higher, and a charge/discharge efficiency of 90% or less.

The negative electrode composition according to the present application includes the silicon-based active material in order to increase the capacity of the negative electrode, and also includes the carbon-based material with the certain condition in the specific content for serving as a negative electrode active material. Accordingly, the volume expansion due to the charging and discharging can be effectively prevented, as compared with a case in which the negative electrode composition includes the silicon-based active material alone.

Hereinafter, the negative electrode composition according to the present application will be described in detail.

In an exemplary embodiment of the present application, there is provided the negative electrode composition in which the carbon-based material includes a graphite.

In this case, the carbon-based material according to the present application is different from artificial graphite and natural graphite used as negative electrode active materials in the related art, and has also a different role and structure from plate-like graphite used as a negative electrode conductive material in the related art. Unlike the artificial graphite and natural graphite used as negative electrode active materials, or the plate-like graphite used as a negative electrode conductive material in the related art, the carbon-based material is a material with low charge/discharge efficiency and corresponds to a material with a large amount of charge and a small amount of discharge. The small amount of discharge in the present application means that the carbon-based material has some lithium ions during discharging.

That is, the carbon-based material according to the present application has excellent output characteristics due to its smaller particles, as compared with the natural or artificial graphite in the related art, and has the charge/discharge efficiency within a specific range due to a low degree of graphitization, and the use of the material having the charge/discharge efficiency falling within the range of the present application is for the range of use of the silicon-based active material. Lithium ions charged on graphite are all moved to the silicon-based active material with high capacity and high potential. In this case, the higher the amount of charge of the graphite is (i.e., the lower the charge/discharge efficiency is), Li ions the graphite has are increased, resulting in the silicon-based active material having more lithium.

As a result, using the carbon-based material according to the present application, the range of use of the silicon-based active material has a more stable range.

In an exemplary embodiment of the present application, there is provided the negative electrode composition in which the carbon-based material has a charge capacity of 400 mAh/g or higher, a discharge capacity of 350 mAh/g or higher, and a charge/discharge efficiency of 90% or less.

In another exemplary embodiment, the charge capacity of the carbon-based material may satisfy a range of 400 mAh/g or higher, preferably 410mAh/g or higher, and more preferably 420 mAh/g or higher, and 600 mAh/g or less, and preferably 550 mAh/g or less.

In another exemplary embodiment, the discharge capacity of the carbon-based material may satisfy a range of 350 mAh/g or higher, and 500 mAh/g or less, and preferably 450 mAh/g or less.

In an exemplary embodiment of the present application, the charge/discharge efficiency of the carbon-based material may satisfy a range of 90% or less, and preferably 87% or less, and 70% or higher, and preferably 75% or higher.

The carbon-based material according to the present application satisfies the charge capacity, discharge capacity and charge/discharge efficiency described above. Accordingly, when included in the negative electrode composition, the carbon-based material may serve as an active material. That is, the carbon-based material has the ranges described above, so that both the carbon-based material and the silicon-based active material are charged with lithium ions, and at the same time, a phenomenon that lithium ions are transferred to the silicon-based active material having a large capacity according to the difference in capacity of the active materials occurs. Accordingly, the diffusion of lithium ions can be improved, and the uniformity of the overall charging of the silicon-based negative electrode including the lithium ions can be increased. However, the carbon-based material according to the present invention has a charge/discharge efficiency of 90% or less, unlike the artificial graphite or natural graphite used as an existing negative electrode active material, and has excess lithium ions. The excess lithium ions are accumulated in some silicon-based active materials and the effect of prelithiation can also be obtained, thereby exhibiting an excellent effect in the silicon-based negative electrode whose performance is improved according to the charging depth.

In an exemplary embodiment of the present application, there is provided the negative electrode composition in which a content of a functional group (volatile matter) of the carbon-based material is 1.0% or more.

In an exemplary embodiment of the present application, the content of the functional group (volatile matter) is a numerical expression of the content of the functional group included in the carbon-based material, and can be calculated as a weight loss rate as follows.

Weight loss rate = [(weight of material before heat treatment - weight of material after heat treatment) / weight of material before heat treatment] X 100

The amount lost by the heat treatment may be a functional group present on a surface of the material before the heat treatment. The functional group may be at least one functional group selected from the group consisting of a hydroxy group, a carboxy group, an aldehyde group, a phenol group, a ketone group, an anhydride group, a lactone group, a peroxide group, an ether group, a hemiacetal group, a quinone group, and an amine group.

The content of the functional group (Volatile matter) according to the present application is analyzed using an analysis method capable of confirming a mass while raising temperature using thermal analysis. A method used in the present application is a method of TPD mass. Specifically, the content can be measured by a method of confirming an amount of a compound that is volatilized by raising temperature of a measurement sample to 950°C, and the analyzed amount can be expressed as the content of the functional groups present on the surface of the carbon-based material.

In an exemplary embodiment of the present application, the content of the functional group (volatile matter) of the carbon-based material may satisfy a range of 1.0% or more, and preferably 1.3% more, and 5% or less, preferably 4.5% or less, and more preferably 4.0% or less.

The negative electrode composition according to the present application corresponds to a silicon-based electrode including a silicon-based active material as a main material. In this case, when the content of the functional group of the carbon-based material satisfies the above range, dispersibility in water is improved, and thus, the effect of storing and transferring lithium ions in the negative electrode composition can be maximized.

The carbon-based material according to the present application has a low degree of graphitization and low charge/discharge efficiency. The degree of graphitization is adjusted through high-temperature firing. In this case, the content of the functional group can be adjusted to the above-described range by adjusting the degree of graphitization (adjusting the firing temperature).

In an exemplary embodiment of the present application, there is provided the negative electrode composition in which the carbon-based material has a center particle diameter (D50) of 10 um or less.

In another exemplary embodiment, the center particle diameter (D50) of the carbon-based material may satisfy a range of 10 um or less, preferably 8 um or less, and more preferably 7 um or less, and 1 um or greater, and preferably 3 um or greater.

In an exemplary embodiment of the present application, the carbon-based material may be included in an amount of 15 parts by weight or less, preferably 13 parts by weight or less, and more preferably 12 parts by weight or less, and 1 part by weight or more, and preferably 5 parts by weight or more, on the basis of 100 parts by weight of the negative electrode composition.

The negative electrode composition according to the present application includes a silicon-based active material with excellent capacity characteristics as a main active material, and also includes the carbon-based material having the above characteristics in the content described above. That is, while maximizing the capacity characteristic of the negative electrode composition *per se,* the negative electrode composition includes the carbon-based material in the specific content, which has a lower capacity characteristic than the silicon-based material, so that when the carbon-based material having lower charge/discharge efficiency than the silicon-based active material is used, excess lithium ions are accumulated in some of the silicon-based active material and the effect of prelithiation can also be obtained, thereby exhibiting an excellent effect in the silicon-based negative electrode whose performance is improved according to the charging depth.

In an exemplary embodiment of the present application, there is provided the negative electrode composition in which the silicon-based active material includes one or more selected from the group consisting of SiOx (x=0), SiOx (0<x<2), SiC, and a Si alloy.

In an exemplary embodiment of the present application, the silicon-based active material may include SiOx (x=0) and SiOx (0<x<2), and may include SiOx (x=0) in an amount of 70 parts by weight or more, on the basis of 100 parts by weight of the silicon-based active material.

In another exemplary embodiment, SiOx (x=0) may be included in amount of 70 parts by weight or more, preferably 80 parts by weight or more, and more preferably 90 parts by weight or more, and 100 parts by weight or less, preferably 99 parts by weight or less, and more preferably 95 parts by weight or less on the basis of 100 parts by weight of the silicon-based active material.

In an exemplary embodiment of the present application, for the silicon-based active material, pure silicon (Si) may be particularly used as the silicon-based active material. The use of pure silicon (Si) as the silicon-based active material may mean that, on the basis of 100 parts by weight of the total silicon-based active material as described above, pure Si (SiOx (x=0)) not bonded to other particles or elements are included within the above range.

An average particle diameter (D50) of the silicon-based active material of the present invention may be 5 um to 10 um, specifically 5.5 um to 8 $\mu$m, and more specifically 6 um to 7 um. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. In the meantime, when the average particle diameter satisfies the above range, excessively large silicon particles are excluded, so that a surface of the negative electrode is formed smooth. Accordingly, a current density nonuniformity phenomenon during charging and discharging can be prevented.

In the exemplary embodiment of the present application, the silicon-based active material generally has a characteristic BET specific surface area. The BET specific surface area of the silicon-based active material is preferably 0.01 to 150.0 m$^2$/g, more preferably 0.1 to 100.0 m$^2$/g, particularly preferably 0.2 to 80.0 m$^2$/g, and most preferably 0.2 to 18.0 m$^2$/g. The BET specific surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

In an exemplary embodiment of the present application, the silicon-based active material may be included in an amount of 60 parts by weight or more, on the basis of 100 parts by weight of the negative electrode composition.

In another exemplary embodiment, the silicon-based active material may be included in an amount of 60 parts by weight or more, preferably 65 parts by weight or more, and more preferably 70 parts by weight or more, and 90 parts by weight or less, preferably 85 parts by weight or less, and more preferably 80 parts by weight or less, on the basis of 100 parts by weight of the negative electrode composition.

The negative electrode composition according to the present application includes the certain amount of the specific carbon-based material that can control the volume expansion rate during charging and discharging even when the silicon-based active material having a significantly high capacity is used in the range described above, and does not cause a problem in capacity characteristics, thereby exhibiting high capacity characteristics, and at the same time, improving the life characteristics of the electrode.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity (circularity) is determined by Formula 1, in which A is an area and P is a boundary line.

$$[Equation\ 1]$$

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, in the case of a silicon-based active material, even when the characteristics of the silicon-based active material itself are partially adjusted as described above, the volume may rapidly expand during the charging/discharging, thereby causing some problems of damaging the conductive path formed in the negative electrode active material layer.

Therefore, in an exemplary embodiment of the present application, the negative electrode conductive material may include one or more selected from the group consisting of a particulate conductive material, a planar conductive material and a linear conductive material.

In an exemplary embodiment of the present application, the particulate conductive material refers to a conductive material that may be used for improving conductivity of the negative electrode, has conductivity without causing a chemical change and has a spherical or point shape. Specifically, the particulate conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the particulate conductive material may have a BET specific surface area of 40 $m^2/g$ or greater and 70 $m^2/g$ or less, preferably 45 $m^2/g$ or greater and 65 $m^2/g$ or less, and more preferably 50 $m^2/g$ or greater and 60 $m^2/g$ or less.

In an exemplary embodiment of the present application, a content of the functional group (volatile matter) of the particulate conductive material may satisfy a range of 0.01% or more and 1% or less, preferably 0.01% or more and 0.3% or less, and more preferably 0.01% or more and 0.1% or less.

In particular, when the content of the functional group of the particulate conductive material satisfies the above range, a functional group is present on a surface of the particulate conductive material, so that the particulate conductive material can be smoothly dispersed in a solvent when water is used as the solvent.

In an exemplary embodiment of the present application, the particulate conductive material having the content of the functional group within the range described above is included together with the silicon-based active material, and the content of the functional group can be adjusted according to a degree of heat treatment of the particulate conductive material.

In an exemplary embodiment of the present application, the particle diameter of the particulate conductive material may be 10 nm to 100 nm, preferably 20 nm to 90 nm, and more preferably 20 nm to 60 nm.

In an exemplary embodiment of the present application, the negative electrode conductive material may include a planar conductive material.

The planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, an average particle diameter (D50) of the planar conductive material may be 2 um to 7 um, specifically 3 um to 6 $\mu$m, and more specifically 4 um to 5 um. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 um or greater and 1.5 um or less, D50 of 2.5 um or greater and 3.5 um or less and D90 of 7.0 um or greater and 15.0 um or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 $m^2/g$ or greater.

In another exemplary embodiment, the planar conductive material may have a BET specific surface area of 5 $m^2/g$ or greater and 500 $m^2/g$ or less, preferably 5 $m^2/g$ or greater and 300 $m^2/g$ or less, and more preferably 5 $m^2/g$ or greater and 250 $m^2/g$ or less.

In another exemplary embodiment, the planar conductive material is a planar conductive material with a high specific surface area, and the BET specific surface area may satisfy a range of 50 $m^2/g$ or greater and 500 $m^2/g$ or less, preferably 80 $m^2/g$ or greater and 300 $m^2/g$ or less, and more preferably 100 $m^2/g$ or greater and 300 $m^2/g$ or less.

In another exemplary embodiment, the planar conductive material is a planar conductive material with a low specific surface area, and the BET specific surface area may satisfy a range of 5 $m^2/g$ or greater and 40 $m^2/g$ or less, preferably 5 $m^2/g$ or greater and 30 $m^2/g$ or less, and more preferably 5 $m^2/g$ or greater and 25 $m^2/g$ or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In the exemplary embodiment of the present application, the linear conductive material may include SWCNT or MWCNT.

In an exemplary embodiment of the present application, there is provided the negative electrode composition in which the negative electrode conductive material includes one or more selected from the group consisting of a particulate conductive material, a planar conductive material and a linear conductive material, and the negative electrode conductive material is present in an amount of 0.1 part by weight or more and 5 parts by weight or less on the basis of 100 parts by weight of the negative electrode composition.

In another exemplary embodiment, the negative electrode conductive material may be included in an amount of 0.1 part by weight or more and 5 part by weight or less, preferably 0.2 part by weight or more and 3 parts by weight or less, and more preferably 0.2 part by weight or more and 1 part by weight or less, on the basis of 100 parts by weight of the negative electrode composition.

In an exemplary embodiment of the present application, the negative electrode conductive material may include a linear conductive material.

In particular, in an exemplary embodiment of the present application, as the negative electrode conductive material includes the linear conductive material and satisfies the composition and ratio described above, the lifespan characteristics of an existing lithium secondary battery are not significantly affected, and the number of points where charging and discharging are possible increases, resulting in the excellent output characteristics at a high C-rate.

The negative electrode conductive material according to the present application has a completely different configuration from a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the existing negative electrode active material. It also has a different structure and role from the carbon-based material according to the present application. Specifically, the carbon-based active material that is used as the existing negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a plane or plate-like shape, and may be expressed as plate-like graphite. That is, the planar conductive material is a material that is included so as to maintain a conductive path in the negative electrode active material layer, and means a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high capacity characteristics with respect to storing and releasing lithium, and serves to store and release all lithium ions transferred from the positive electrode.

On the other hand, in the present application, the use of a carbon-based active material as an active material means that the carbon-based active material is processed into a point or spherical shape and used as a material for storing or releasing lithium.

That is, in an exemplary embodiment of the present application, artificial graphite or natural graphite, which is a carbon-based active material, has a point-like shape, and a BET specific surface area thereof may satisfy a range of 0.1 $m^2$/g or greater and 4.5 $m^2$/g or less. In addition, plate-like graphite, which is a planar conductive material, has a planar shape, and a BET specific surface area thereof may be 5 $m^2$/g or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure in volume expansion and relaxation of the silicon-based active material. When such roles are satisfied, all of the general binders can be applied. Specifically, an aqueous binder may be used, and more specifically, a PAM-based binder may be used.

In an exemplary embodiment of the present application, there is provided the negative electrode for a lithium secondary battery in which the negative electrode binder includes a water-based binder and the negative electrode binder is included in an amount of 5 parts by weight or more and 15 parts by weight or less, on the basis of 100 parts by weight of the negative electrode composition.

In another exemplary embodiment, the negative electrode binder may be included in an amount of 5 parts by weight or more and 15 parts by weight or less, preferably 7 parts by weight or more and 13 parts by weight or less, and more preferably 9 parts by weight or more and 12 parts by weight or less, on the basis of 100 parts by weight of the negative electrode composition.

In the case of the negative electrode for a lithium secondary battery according to the present application, the silicon-based active material is used in order to maximize capacity characteristics, and volume expansion during charging and discharging is greater than when a conventional carbon-based active material is used as a main active material. Accordingly, the negative electrode includes the negative electrode binder in the content described above, and thus, has a feature that can efficiently control the volume expansion due to charging and discharging of the silicon-based active material having high rigidity.

In an exemplary embodiment of the present application, there is provided a negative electrode for a lithium secondary battery including: a negative electrode current collector layer; and a negative electrode active material layer including the negative electrode composition according to the present application formed on one surface or both surfaces of the negative electrode current collector layer.

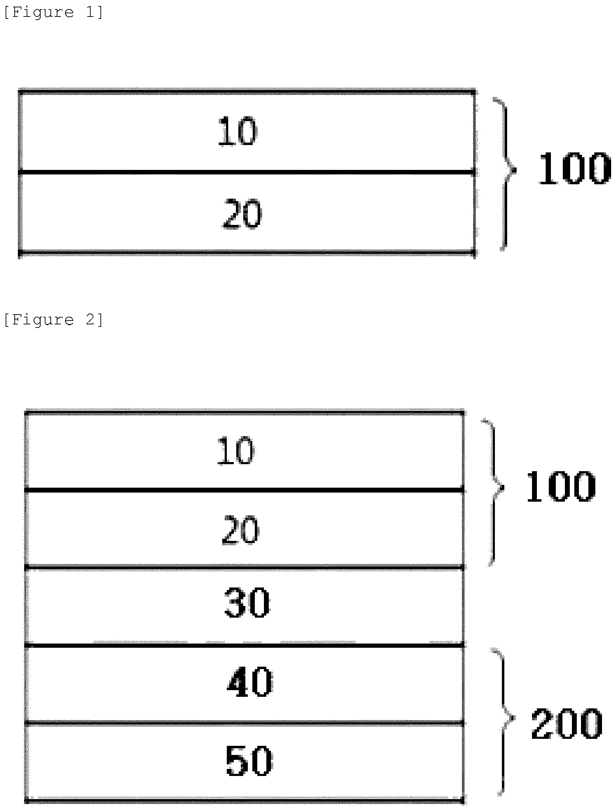

FIG. 1 shows a laminated structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 1 shows that the negative electrode active material layer is formed on one surface, but the negative electrode active material layer may be formed on both surfaces of the negative electrode current collector layer.

In an exemplary embodiment of the present application, the negative electrode for a lithium secondary battery may be formed by applying a negative electrode slurry including the negative electrode composition to one surface or both surfaces of the negative electrode current collector layer and drying.

In this case, the negative electrode slurry may include the negative electrode composition described above, and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode composition included in the negative electrode slurry, and may mean a content of the negative electrode composition on the basis of 100 parts by weight of the negative electrode slurry.

When the solid content of the negative electrode slurry satisfies the above range, the viscosity is appropriate during formation of the negative electrode active material layer, so that particle aggregation of the negative electrode composition is minimized to efficiently form the negative electrode active material layer.

In an exemplary embodiment of the present application, the slurry solvent may be used without limitation as long as it can dissolve the negative electrode composition, and specifically, water, acetone, or NMP may be used.

In an exemplary embodiment of the present application, the negative electrode current collector layer generally has a thickness of 1 um to 100 um. Such negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In an exemplary embodiment of the present application, there is provided the negative electrode for a lithium secondary battery in which a thickness of the negative electrode current collector layer is 1 um or greater and 100 um or less and a thickness of the negative electrode active material layer is 20 um or greater and 500 um or less.

However, the thicknesses may be variously modified depending on a type and use of the negative electrode used, and are not limited thereto.

In an exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on compositions and contents of the silicon-based active material, conductive material and binder included in the negative electrode active material layer, and in particular, satisfies the range described above when the silicon-based active material according to the present application and the conductive material are included in the specific compositions and contents, so that the electrode has appropriate ranges of electrical conductivity and resistance.

An exemplary embodiment of the present application provides a lithium secondary battery including a positive electrode; the negative electrode for a lithium secondary battery according to the present application; a separator provided between the positive electrode and the negative electrode; and an electrolyte.

FIG. 2 shows a laminated structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a laminated structure with a separator 30 interposed therebetween.

The secondary battery according to the exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 to 500 um, and a surface of the current collector may be formed with microscopic irregularities to enhance adhesive force of the positive electrode active material. For example, the positive electrode current collector layer may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4(0 \leq c1 \leq 0.33)$, $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder, together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesion between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used.

In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, SCN- and $(CF_3CF_2SO_2)_2N-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving lifetime characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

[Mode for Invention]

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Manufacture Example>**

**<Manufacture of Negative Electrode>**

**<Examples 1 to 4 and Comparative Examples 1 to 4>**

Si (average particle diameter (D50): 3.5 μm) serving as a silicon-based active material, graphite (satisfying physical properties described in Table 1 below) serving as a carbon-based material, SWCNT and polyacrylamide (PAM) serving as a binder were added to distilled water serving as a solvent for formation of a negative electrode slurry in a weight ratio of 80:10:0.21:9.79 to manufacture a negative electrode slurry (solid concentration: 25 wt%).

The SWCNT satisfied a BET specific surface area of 1000 to 1500 $m^2/g$, and an aspect ratio of 10000 or greater.

As a specific mixing method, after dispersing the SWCNT, the binder and water at 2500 rpm for 30 minutes with a homo mixer, the silicon-based active material and graphite, which is a carbon-based material, were added to the dispersion, which was then dispersed at 2500 rpm for 30 minutes to prepare a negative electrode slurry.

The negative electrode slurry was coated on both surfaces of a copper current collector (thickness: 26 um) serving as a negative electrode current collector layer with a loading amount of 87.7 mg/25 $cm^2$, which was then roll-pressed and dried in a vacuum oven at 130°C for 10 hours to form a negative electrode active material layer (thickness: 33 pm), which was used as the negative electrode of Examples 1 to 4 and Comparative Examples 1 to 4 (thickness of the negative electrode: 41 μm, porosity of the negative electrode: 40.0%).

For reference, the graphite as a carbon-based material used in Comparative Examples 1 and 2 corresponds to natural graphite used as a general carbon-based active material, and the graphite as a carbon-based material used in Comparative Examples 3 and 4 corresponds to artificial graphite used as a general carbon-based active material.

[Table 1]

| | Average particle diameter D50 (μm) | Charge capacity (mAh/g) | Discharge capacity (mAh/g) | Charge/dis charge efficiency (%) | Content of functional group (%) |
|---|---|---|---|---|---|
| Example 1 | 3.5 | 449.2 | 354 | 78.8 | 2.72 |
| Example 2 | 6.4 | 434.6 | 362 | 83.3 | 1.71 |

(continued)

|  | Average particle diameter D50 (μm) | Charge capacity (mAh/g) | Discharge capacity (mAh/g) | Charge/dis charge efficiency (%) | Content of functional group (%) |
|---|---|---|---|---|---|
| Example 3 | 4.9 | 420 | 365 | 86.9 | 1.34 |
| Example 4 | 3.4 | 445 | 350 | 78.6 | 2.55 |
| Comparative Example 1 | 11.8 | 387.6 | 362 | 93.40 | 0.37 |
| Comparative Example 2 | 16.5 | 385.4 | 360 | 93.41 | 0.35 |
| Comparative Example 3 | 20.8 | 375.9 | 352 | 93.64 | 0.47 |
| Comparative Example 4 | 15.2 | 378.4 | 350 | 92.49 | 0.30 |

**<Comparative Example 5>**

A negative electrode was prepared in the same manner as in Example 1, except that Si (average particle diameter (D50): 3.5 μm) serving as a silicon-based active material, graphite (artificial graphite) serving as the carbon-based material of Comparative Example 3, SWCNT, CMC and SBR were added to distilled water serving as a solvent for formation of a negative electrode slurry in a weight ratio of 9.79:86:0.21:1:3 to manufacture a negative electrode slurry.

**<Comparative Example 6>**

Si (average particle diameter (D50): 3.5 μm) serving as a silicon-based active material, the carbon-based material in Example 1, SWCNT and polyacrylamide (PAM) serving as a binder were added to distilled water serving as a solvent for formation of a negative electrode slurry in a weight ratio of 40:50:0.21:9.79 to manufacture a negative electrode slurry (solid concentration: 25 wt%).

**<Manufacture of secondary battery>**

$LiNi_{0.6}Co_{0.2}Mn_{0.2}O_2$ (average particle diameter (D50) : 15 μm) serving as a positive electrode active material, carbon black (product name: Super C65, manufacturer: Timcal) serving as a conductive material, and polyvinylidene fluoride (PVdF) serving as a binder were added to N-methyl-2-pyrrolidone (NMP) serving as a solvent for formation of a positive electrode slurry in a weight ratio of 97:1.5:1.5 to manufacture a positive electrode slurry (solid concentration: 78 wt%).

The positive electrode slurry was coated on both surfaces of an aluminum current collector (thickness: 12 um) serving as a positive electrode current collector with a loading amount of 537 mg/25 cm$^2$, which was then roll-pressed and dried in a vacuum oven at 130°C for 10 hours to form a positive electrode active material layer (thickness: 65 um), thereby manufacturing a positive electrode (thickness of the positive electrode: 77 um, porosity: 26%).

A secondary battery of Example 1 was manufactured by interposing a polyethylene separator between the positive electrode and the negative electrode of Example 1 and injecting an electrolyte.

The electrolyte was obtained by adding vinylene carbonate to an organic solvent, in which fluoroethylene carbonate (FEC) and diethyl carbonate (DMC) were mixed in a volume ratio of 30:70, in an amount of 3 wt.% on the basis of a total weight of the electrolyte and adding $LiPF_6$ as a lithium salt to a concentration of 1M.

Secondary batteries were each manufactured in the same manner as in the above method, except that the negative electrodes of the Examples and Comparative Examples were used.

**Experimental Example 1 Evaluation on coin half cell lifespan**

Lifespan evaluation was performed on the secondary battery manufactured above by using an electrochemical charger/discharger.

The coin half-cell batteries were each charged and discharged under conditions of charging (0.5C CC/CV charge capacity cut (1800 mAh/G, 50% of Si capacity)) and discharging (0.5C CC discharge 1.0V cut), the number of times of cycles until the capacity retention rate reached about 80% was checked, and the results are shown in Table 2 below.

The capacity retention rate at Nth cycle was evaluated by a following formula.

$$\text{Capacity retention rate (\%)} = \{(\text{discharge capacity at Nth cycle}) / (\text{discharge capacity at first cycle})\} \times 100$$

[Table 2]

| Coin half cell | Cycle number @ 80% capacity |
|---|---|
| Example 1 | 50 |
| Example 2 | 40 |
| Example 3 | 44 |
| Example 4 | 47 |
| Comparative Example 1 | 22 |
| Comparative Example 2 | 26 |
| Comparative Example 3 | 24 |
| Comparative Example 4 | 25 |
| Comparative Example 5 | 10 |
| Comparative Example 6 | 24 |

## Experimental Example 2 Evaluation on monocell lifespan

Lifespan evaluation was performed on the secondary battery manufactured above by using an electrochemical charger/discharger.

The monocell batteries were each charged and discharged under conditions of charging (1.0C CC/CV charge 4.2V 0.05C cut) and discharging (0.5C CC discharge 3.0V cut), the number of times of cycles until the capacity retention rate reached about 80% was checked, and the results are shown in Table 3 below.

The capacity retention rate at Nth cycle was evaluated by a following formula.

$$\text{Capacity retention rate (\%)} = \{(\text{discharge capacity at Nth cycle}) / (\text{discharge capacity at first cycle})\} \times 100$$

[Table 3]

| Mono cell | Cycle number @ 80% capacity |
|---|---|
| Example 1 | 244 |
| Example 2 | 245 |
| Example 3 | 240 |
| Example 4 | 241 |
| Comparative Example 1 | 218 |
| Comparative Example 2 | 223 |
| Comparative Example 3 | 222 |
| Comparative Example 4 | 221 |

(continued)

| Mono cell | Cycle number @ 80% capacity |
|---|---|
| Comparative Example 5 | 84 |
| Comparative Example 6 | 203 |

Unlike the artificial graphite and natural graphite (Comparative Examples 1 to 4) used as negative electrode active materials, or the plate-like graphite used as a negative electrode conductive material in the related art, the carbon-based material according to the present application is a material with low charge/discharge efficiency and corresponds to a material with a large amount of charge and a small amount of discharge. Accordingly, from the results of Examples and Comparative Examples, the negative electrode composition according to the present application has the composition as described above, so that during the first charging, both the carbon-based material and the silicon-based active material are charged with lithium ions, and at the same time, a phenomenon that lithium ions are transferred to the silicon-based active material having a large capacity according to the difference in capacity of the active materials occurs. Accordingly, it could be confirmed that the diffusion of lithium ions can be improved, and the uniformity of the overall charging of the silicon-based negative electrode including the lithium ions can be increased.

The carbon-based materials of Comparative Examples 1 to 4 correspond to materials having high charge/discharge efficiency and low content of the functional group. In this case, unlike Examples 1 to 4, it could be confirmed that the carbon-based material with high charge/discharge efficiency could not accumulate extra lithium ions, and thus, the performance was not improved according to the charging depth, and the lifespan evaluation was poor, as compared with Examples 1 to 4.

Comparative Example 5 corresponds to a carbon-based electrode rather than a silicon-based electrode, in which a high content of graphite (artificial graphite) was used as a carbon-based material, and the thickness of the electrode became thicker so as to manufacture an electrode based on the same capacity as in Example. Accordingly, it could be confirmed that the electrode conductivity and C-rate characteristics were deteriorated, and thus, the lifespan and electrode performance characteristics were deteriorated. In addition, in the case of Comparative Example 5, large separation occurred due to insufficient electrode adhesion and too thick electrode thickness during the electrode manufacturing process, and the decrease in performance according to the cycle corresponds to a decrease in C-rate characteristics due to the increase in electrode thickness.

In the case of Comparative Example 6, the silicon-based electrode includes a high content of the carbon-based material according to the present application. Also in this case, as in Comparative Example 5, it could be confirmed that the electrode became thicker to express the same capacity as in the Example, the C-rate characteristics (output characteristics) of the electrode was accordingly reduced, and the lifespan and electrode performance were deteriorated as in Comparative Example 5.

REFERENCE SIGNS LIST

10: negative electrode current collector layer
20: negative electrode active material layer
30: separator
40: positive electrode active material layer
50: positive electrode current collector layer
100: negative electrode for lithium secondary battery
200: positive electrode for lithium secondary battery

Claims

1.  A negative electrode composition comprising:

a silicon-based active material;
a negative electrode conductive material;
a negative electrode binder; and
a carbon-based material,

wherein the carbon-based material is included in an amount of 15 parts by weight or less on the basis of 100 parts by weight of the negative electrode composition, and

wherein the carbon-based material has a charge capacity of 400 mAh/g or higher, a discharge capacity of 350 mAh/g or higher, and a charge/discharge efficiency of 90% or less.

2.  The negative electrode composition of claim 1, wherein the carbon-based material comprises graphite.

3.  The negative electrode composition of claim 1, wherein a content of a functional group (volatile matter) of the carbon-based material is 1.0% or more.

4.  The negative electrode composition of claim 1, wherein a center particle diameter (D50) of the carbon-based material is 10 um or less.

5.  The negative electrode composition of claim 1, wherein the silicon-based active material comprises one or more selected from the group consisting of SiOx (x=0), SiOx (0<x<2), SiC, and a Si alloy.

6.  The negative electrode composition of claim 1, wherein the silicon-based active material comprises one or more selected from the group consisting of SiOx (x=0) and SiOx (0<x<2), and comprises the SiOx (x=0) in an amount of 70 parts by weight or more on the basis of 100 parts by weight of the silicon-based active material.

7.  The negative electrode composition of claim 1, wherein the silicon-based active material is included in an amount of 60 parts by weight or more on the basis of 100 parts by weight of the negative electrode composition.

8.  The negative electrode composition of claim 1, wherein the negative electrode conductive material comprises one or more selected from the group consisting of a particulate conductive material, a planar conductive material and a linear conductive material, and

wherein the negative electrode conductive material is included in an amount of 0.1 part by weight or more and 5 parts by weight or less on the basis of 100 parts by weight of the negative electrode composition.

9.  A negative electrode for a lithium secondary battery comprising:

    a negative electrode current collector layer; and
    a negative electrode active material layer comprising the negative electrode composition of any one of claims 1 to 8 formed on one surface or both surfaces of the negative electrode current collector layer.

10. The negative electrode for a lithium secondary battery of claim 9, wherein a thickness of the negative electrode current collector layer is 1 um or greater and 100 um or less, and

wherein a thickness of the negative electrode active material layer is 20 um or greater and 500 um or less.

11. A lithium secondary battery comprising:

    a positive electrode;
    the negative electrode for a lithium secondary battery of claim 9;
    a separator provided between the positive electrode and the negative electrode; and
    an electrolyte.

[Figure 1]

[Figure 2]

## INTERNATIONAL SEARCH REPORT

| | International application No. |
|---|---|
| | **PCT/KR2023/003923** |

| A. | CLASSIFICATION OF SUBJECT MATTER |
|---|---|

**H01M 4/1395**(2010.01)i; **H01M 4/38**(2006.01)i; **H01M 4/583**(2010.01)i; **H01M 4/134**(2010.01)i; **H01M 4/62**(2006.01)i; **H01M 4/04**(2006.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/1395(2010.01); H01M 10/052(2010.01); H01M 10/0525(2010.01); H01M 4/131(2010.01); H01M 4/134(2010.01); H01M 4/36(2006.01); H01M 4/38(2006.01); H01M 4/58(2010.01); H01M 4/583(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 조성물(anode composition), 실리콘계 활물질(silicon-based active material), 탄소계 물질(carbonaceous material), 충전 용량(charge capacity), 방전 용량(discharge capacity)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2022-0029488 A (LG ENERGY SOLUTION, LTD.) 08 March 2022 (2022-03-08)<br>See paragraphs [0004], [0021]-[0022], [0042] and [0086]; and claims 1 and 13-14. | 1-11 |
| A | JP 2018-101622 A (SANYO CHEM IND., LTD. et al.) 28 June 2018 (2018-06-28)<br>See entire document. | 1-11 |
| A | KR 10-2019-0033214 A (SK INNOVATION CO., LTD.) 29 March 2019 (2019-03-29)<br>See entire document. | 1-11 |
| A | KR 10-2013-0122471 A (SAMSUNG SDI CO., LTD.) 07 November 2013 (2013-11-07)<br>See entire document. | 1-11 |
| A | KR 10-2018-0001518 A (NEPES CO., LTD.) 04 January 2018 (2018-01-04)<br>See entire document. | 1-11 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 June 2023** | **03 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

International application No.

**PCT/KR2023/003923**

| Patent document cited in search report | | | Publication date (day/month/year) | Patent family member(s) | | | Publication date (day/month/year) |
|---|---|---|---|---|---|---|---|
| KR | 10-2022-0029488 | A | 08 March 2022 | CN | 116057723 | A | 02 May 2023 |
| | | | | EP | 4174981 | A1 | 03 May 2023 |
| | | | | WO | 2022-045852 | A1 | 03 March 2022 |
| JP | 2018-101622 | A | 28 June 2018 | CN | 110088948 | A | 02 August 2019 |
| | | | | EP | 3561912 | A1 | 30 October 2019 |
| | | | | EP | 3561912 | A4 | 08 January 2020 |
| | | | | EP | 3561912 | B1 | 02 December 2020 |
| | | | | JP | 6998194 | B2 | 18 January 2022 |
| | | | | US | 10673057 | B2 | 02 June 2020 |
| | | | | US | 2019-0319254 | A1 | 17 October 2019 |
| | | | | WO | 2018-117086 | A1 | 28 June 2018 |
| KR | 10-2019-0033214 | A | 29 March 2019 | KR | 10-2405902 | B1 | 08 June 2022 |
| KR | 10-2013-0122471 | A | 07 November 2013 | CN | 103378357 | A | 30 October 2013 |
| | | | | CN | 103378357 | B | 01 August 2017 |
| | | | | EP | 2660903 | A1 | 06 November 2013 |
| | | | | EP | 2660903 | B1 | 13 May 2020 |
| | | | | JP | 2013-232414 | A | 14 November 2013 |
| | | | | JP | 6399731 | B2 | 03 October 2018 |
| | | | | US | 2013-0288118 | A1 | 31 October 2013 |
| | | | | US | 9508982 | B2 | 29 November 2016 |
| KR | 10-2018-0001518 | A | 04 January 2018 | None | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220037219

- JP 2009080971 A